# EUROPEAN PATENT APPLICATION

(11) **EP 3 647 647 A1**
(43) Date of publication of application: **06.05.2020**
(21) Application number: 19188780.1
(22) Date of filing: 29.07.2019
(51) Int. Cl.: F16L 37/088

(54) **QUICK CONNECTOR ASSEMBLY**

(30) Priority: 05.11.2018 KR 20180005012 U
(71) Applicant: HS R & A Co., Ltd., Yangsan-si, Gyeongsangnam-do 50592 (KR)
(72) Inventor: CHOI, Jae Hyeok, 50592 Gyeongsangnam-do (KR); KIM, Guk Hyun, 50592 Gyeongsangnam-do (KR); SUNG, Seung Hoon, 50592 Gyeongsangnam-do (KR); SHIN, Jung Hyun, 50592 Gyeongsangnam-do (KR)
(74) Representative: Tiburzi, Andrea

(57) **Abstract**

The disclosure relates to a quick connector configured such that, when a coupling case connected to an outer case is separated, the coupling case is capable of being separated such that airtightness is be maintained without fully separating the fixing member. More specifically, the quick connector assembly includes: an tubular outer case having a hollow portion formed therein: a coupling case inserted into the hollow portion to be connected to the outer case so as to allow fluid therethrough; an airtightness maintaining member provided inside the hollow portion and coupled to an outer surface of the coupling case such that airtightness between the coupling case and the outer case can be maintained; and a fixing member detachably fitted from an outside of the outer case to fix the coupling case inserted into the hollow portion by elasticity thereof, wherein the fixing member is introduced toward the hollow portion from the outside of the outer case so as to fix an outer surface of the coupling case located inside the hollow portion by compression.

## Description

### BACKGROUND

### 1) FIELD

The disclosure relates to a quick connector configured such that, when a coupling case connected to an outer case is separated, the coupling case is capable of being separated such that airtightness is be maintained without fully separating the fixing member.

### 2) DESCRIPTION OF RELATED ART

The above information is presented as background information only to assist with an understanding of the disclosure. No determination has been made, and no assertion is made, as to whether any of the above might be applicable as prior art with regard to the disclosure.

Various components are disposed inside a vehicle, and various fluids, such as air, a mixed gas, exhaust gas, and fuel, are circulated between the components. For example, in an engine cooling system, an engine and a radiator are provided, and heat generated from the engine is cooled in the radiator by circulating cooling water through the engine and the radiator.

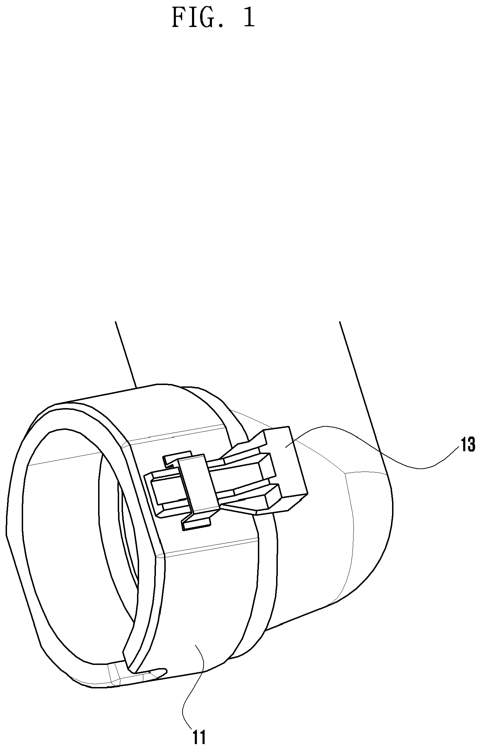

In this case, a radiator hose is provided in order to form a flow path of cooling water by connecting the engine and the radiator to each other, and an end of the radiator hose is provided with a quick connector for easily connecting the radiator hose to the radiator through a clamping work. The corresponding prior art is illustrated in FIG. 1.

The configuration of a conventional quick connector for connecting a radiator is simply described with reference to FIG. 1. Although not illustrated in detail, the quick connector includes an outer case 11 configured to be inserted into a connection port formed in a radiator or fastened to the radiator in advance, a spring configured to prevent the connection port from escaping, and an O-ring configured to prevent cooling water from leaking, and a fixing clip 13 configured to prevent the separation of the quick connector is provided outside the outer case 11.

With the conventional quick connector for connecting a radiator described above, the connection of the quick connector by the spring is not perfect and thus two or more fixing clips 13 should be provided separately, whereby there is an inconvenience in that the outer case and the connection port can be separated only when the plurality of fixing clips are separated one by one.

### SUMMARY

The disclosure has been made in view of the foregoing, and provides a quick connector, which is separable without fully removing a fixing clip when separating an outer case and a connection port from each other and is improved in airtightness to be capable of preventing fluid from leaking.

In view of the foregoing, the disclosure provides a quick connector assembly including: an tubular outer case having a hollow portion formed therein: a coupling case inserted into the hollow portion to be connected to the outer case so as to allow fluid therethrough; an airtightness maintaining member provided inside the hollow portion and coupled to an outer surface of the coupling case such that airtightness between the coupling case and the outer case can be maintained; and a fixing member detachably fitted from an outside of the outer case to fix the coupling case inserted into the hollow portion by elasticity thereof, wherein the fixing member is introduced toward the hollow portion from the outside of the outer case so as to fix an outer surface of the coupling case located inside the hollow portion by compression.

The fixing member may include: a fixing body formed in a "U" shape or "⊏" shape, and configured to be fitted to the outer surface of the outer case, opposite portions of the fixing body being introduced into the hollow portion to compress the coupling case; and a pair of bent portions formed by bending opposite ends of the fixing body to prevent the fixing body from escaping from the outer case.

The outer case may include: an outer body opened at opposite ends thereof and having therein the hollow portion formed in a longitudinal direction, a hose being fitted onto an outer surface of one end thereof; and an insertion groove formed in a remaining end of the outer body to communicate with the hollow portion such that the fixing member being inserted into the insertion groove so as to fix the coupling case. An installation groove, into which the airtightness maintaining member is fixedly inserted, may be formed in an inner surface of the outer body, and a seating groove may be formed in the outer surface of the outer body such that the fixing member is seated therein such that the coupling case is detachable without fully separating the fixing member when separating the fixing member from the insertion groove. The seating groove may be formed in an escape prevention piece formed to protrude to be connected to an upper end of the insertion groove, thereby preventing the fixing member from escaping.

The coupling case may include an inner body, one end of which is connected to the hose and a remaining end of which is inserted into the hollow portion to be connected to the outer case. The remaining end of the inner body may be press-fitted to the airtightness maintaining member so as to maintain airtightness for preventing the fluid from leaking out while moving, and a coupling groove, into which the fixing member introduced into the hollow portion is inserted, may be formed in the outer surface of the remaining end of the inner body.

According to the disclosure, the quick connector has an effect compared to the conventional connector in that the inner body inserted into the hollow portion to be connected to the outer body can be easily separated by rotating the fixing body such that a lifted bent portion can be seated in the seating groove, rather than fully separating the fixing body from the outer body.

### BRIEF DESCRIPTION OF THE DRAWINGS

For a more complete understanding of the disclosure and its advantages, reference is now made to the following description taken in conjunction with the accompanying drawings, in which like reference numerals represent like parts:
FIG. 1 is a view illustrating a conventional quick connector;
FIG. 2 is a view illustrating a quick connector assembly according to the disclosure;
FIG. 3 is a view illustrating an airtightness maintaining member and a fixing member provided in an outer case for the quick connector assembly according to the disclosure;
FIG. 4 is a view illustrating the holding member exposed inside a hollow portion for the quick connector assembly according to the disclosure;
FIG. 5 is a view illustrating a coupling case for the quick connector assembly according to the disclosure;
FIG. 6A is a view illustrating the state in which the fixing member is coupled to an outer body for the quick connector assembly according to the disclosure;
FIG. 6B is a view illustrating the state in which the fixing member is coupled to the outer body for the quick connector assembly according to the disclosure;
FIG. 7 is a perspective view corresponding to FIGS. 6A and 6B;
FIG. 8A is a view illustrating the state in which the fixing member of FIGS. 6A and 6B is seated in a seating groove;
FIG. 8B is a view illustrating the state in which the fixing member of FIGS. 6A and 6B is seated in a seating groove; and
FIG. 9 is a perspective view corresponding to FIG. 8B.

### DETAILED DESCRIPTION

Hereinafter, a quick connector assembly (hereinafter, simply referred to as a "quick connector") according to the disclosure will be described in detail with reference to the accompanying drawings. The quick connector according to an embodiment of the disclosure may be utilized not only in a cooling system of a vehicle, but also in a part where a hose is connected to other components.

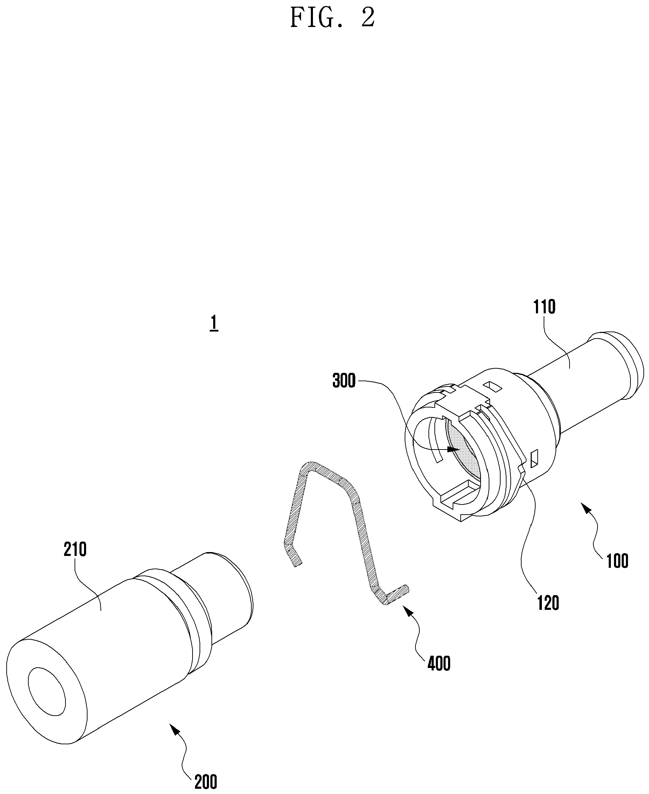

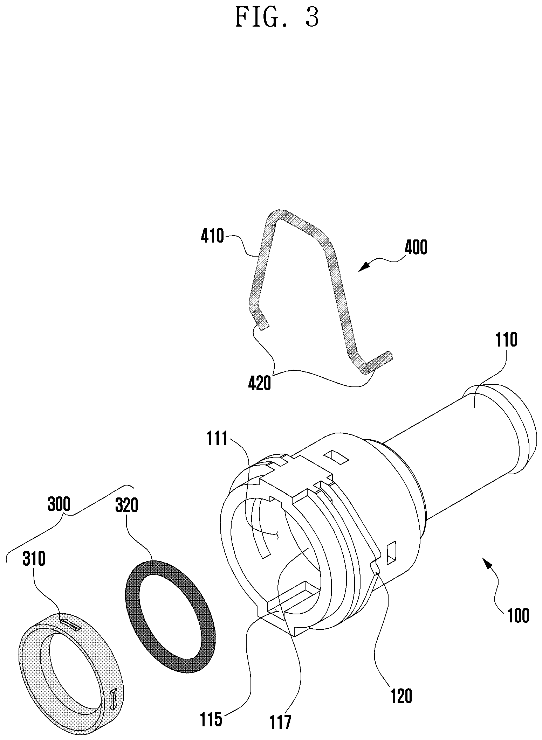

First, as illustrated in FIGS. 2 and 3, a quick connector 1 according to the disclosure generally includes an outer case 100, a coupling case 200, an airtightness maintaining member 300, and a fixing member 400.

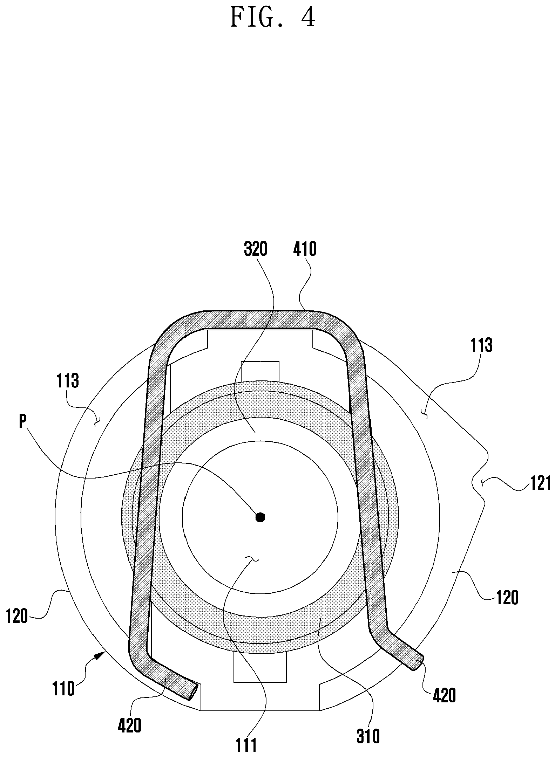

More specifically, referring to FIGS. 3 and 4, the outer case 100 includes, for example, an outer body 110 and an escape prevention piece 120 as a configuration to which the coupling case 200 (described later) is coupled so as to provide a moving path through which a fluid moves in the state in which hoses (not illustrated) are connected to the opposite sides thereof, and a configuration to which the fixing member 400 is coupled to fix the coupling case 200.

The outer body 110 is generally formed in a tubular shape, and has opposite opened ends and a hollow portion 111 extending in the longitudinal direction to communicate with the opposite ends. The hollow portion 111 is configured such that an inner body 210 is capable of being inserted into and coupled to the hollow portion 111.

One end of the outer body 110 is coupled to be connected to a hose by press-fitting the outer diameter of the one end into the inner diameter of the hose, and a portion of the inner body 210 is inserted into the other end of the outer body 110, thereby providing a moving path in which fluid moves.

At this time, the inner body 210 inserted into the hollow portion 111 is preferably configured such that the airtightness maintaining member 300 is capable of maintaining airtightness so as to prevent the fluid from leaking out to the outside inserted into the inside of the hollow portion 11. The airtightness maintaining member 300 will be described in more detail below.

In addition, insertion grooves 113 may be formed in the outer surface of the other end of the outer body 110 such that the fixing member 400 (described layer) is inserted into the insertion grooves 113 so as to fix the inner body 210 by compression such that the inner body 210 inserted into the hollow portion 111 does not escape. The insertion grooves 113 are formed through the outer body 110 to communicate with the hollow portion 111 such that the fixing member 400 inserted into the insertion grooves 113 is elastically fitted to the inner body 210 inserted into the hollow portion 111, so that the inner body 210 can be fixed.

In the inner surface of the outer body 110 forming the hollow portion 111, rotation prevention grooves 115 may be formed to prevent the inner body 210, inserted into the hollow portion 111, from rotating or moving. The rotation prevention grooves 115 are shape-coupled to rotation prevention protrusions 213 formed on the outer surface of the inner body 210 to protrude, so that the rotation and movement of the inner body 210 can be prevented.

In addition, the rotation prevention protrusions 213 inserted into the rotation prevention grooves 115 may also be used to allow the inner body 210 to be stably guided and inserted into the inside of the hollow portion when the inner body 210 is inserted into the hollow portion 111.

Furthermore, an installation groove 117 may be formed in the inner surface of the outer body 110 such that the airtightness maintaining member 300 is stably and detachably installed therein. The installation groove 117 may be formed to have a width that allows a coupling ring 310 and a rubber ring 320 (described later) to be inserted and fixed thereto through shape-fitting.

A pair of escape prevention pieces 120 may be formed to protrude to the outside on the outer surface of the other end of the outer body 110 preferably to be adjacent to each other so as to be connected to the opposite ends of the insertion grooves 113, thereby preventing the fixing member 400, inserted into the insertion grooves 113, from escaping.

The seating groove 121 may be formed in any one of the escape prevention pieces 120. The seating groove 121 may be preferably configured such that a bent portion 420 of the fixing member 400 is temporally inserted into the seating groove 121 so as to allow the inner member 210 from being separated from the outer body 110 without completely separating the fixing member 400 from the outer body 110. This will be described in more detail below.

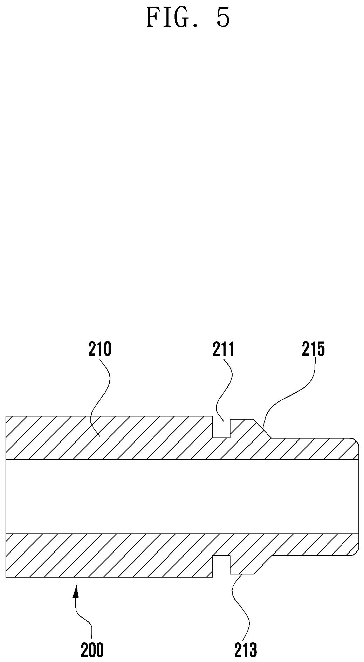

Referring to FIGS. 2 and 5, the coupling case 200 includes the inner body 210 in which, for example, a coupling groove 211 is formed as a configuration for providing a moving path for fluid by being connected to the above-described outer case 100 and coupled to a plurality of hoses.

The inner body 210 is formed in a cylindrical tube shape having opposite opened ends, in which a bore in which fluid moves is formed to communicate with the opened ends, and is inserted into the outer body 110 through the hollow portion 111 at one end thereof.

The inner body 210 inserted into the hollow portion 111 is fixed in the hollow portion 111 when the elastic fixing member 400 fitted to and compressed on the outer surface thereof. For this purpose, a coupling groove 211 is formed in the outer surface of the inner body 210 such that the fixing member 400 is inserted into the coupling groove 211.

Here, the coupling groove 211 may be formed in a band shape along the outer peripheral surface of the inner body 210. However, when the rotation prevention protrusions 213 are formed on the outer peripheral surface of the inner body 210 to be inserted into the rotation prevention groove 115, the coupling grooves 211 may be formed on the opposite sides of the outer surface of the inner body 210 at the positions corresponding to the fixing members 400, thereby providing a stably fixing structure.

The outer surface of the one end of the inner body 210 inserted into the hollow portion 111 is press-fitted into the coupling ring 310 and the rubber ring 320 provided in the hollow portion 111, thereby preventing the fluid, which moves through the bore and the hollow portion 111, from leaking.

For this purpose, the outer diameter of the one end of the inner body 210 is equal to the inner diameter of the coupling ring 310 and larger than the inner diameter of the rubber ring 320, so that the fixing force of the inner body 210 can be improved by the coupling ring 310 and the fixing member 400 and the airtightness can be maintained by the rubber ring 320.

On the outer surface of the inner body 210 coupled to the coupling ring 310 by shape-fitting, a stepped portions 215 corresponding to the inner surface of the coupling ring 310 may be further formed to as to come into close contact with the coupling ring 310. Preferably, the stepped portion 215 are formed on the rotation prevention protrusions 213.

Referring to FIG. 3, the airtightness maintaining member 300 includes the coupling ring 310 and the rubber ring 320 as a configuration for maintaining the airtightness of the inner body 210 inserted into the hollow portion 111 so as to prevent the moving fluid from leaking.

The coupling ring 310 generally has a ring shape and may be formed of a material such as aluminum or a hard-plastic material in order to prevent corrosion. The coupling ring 310 is inserted into the installation groove 117 formed in the inner surface of the inner body 110 and the inner body 210 inserted into the hollow portion 111, whereby the coupling ring 310 is stably fixed inside the hollow portion 111 together with the fixing member 400.

The inner surface of the coupling ring 310 provided in the insertion groove 117 comes into contact with the stepped portion 215 formed on the inner body 210, and the inner body 210 may be inserted through the coupling ring 310 so as to limit the distance by which the inner body 210 is inserted into the hollow portion 111.

It is preferable that the inner peripheral surface of the coupling ring 310 be formed to protrude at arbitrary locations toward the central point P to have different diameters such that the inner peripheral surface is capable of easily contacting with the stepped portion 215 and the outer surface of the inner body 210 inserted through the coupling ring 310 is capable of being press-fitted into the coupling ring 310 (see FIG. 4).

The rubber ring 320 is formed generally in a ring shape, and is formed of a rubber material so as to be elastically restorable to have a conventional gasket function, and is inserted into the insertion groove 117 together with the coupling ring 310 so as to allow the outer surface of the inner body 210 to pass therethrough.

As described above, the inner diameter of the rubber ring 320 is smaller than the outer diameter of the inner body 210 to be inserted therethrough such that the inner body 210 is press-fitted into the rubber ring 320, and due to the press-fitting, the fluid moving from the bore to the hollow portion 111 is prevented from leaking.

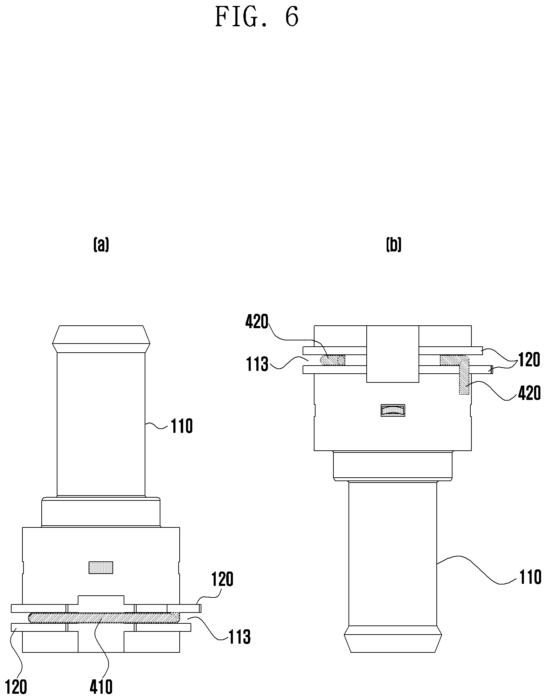

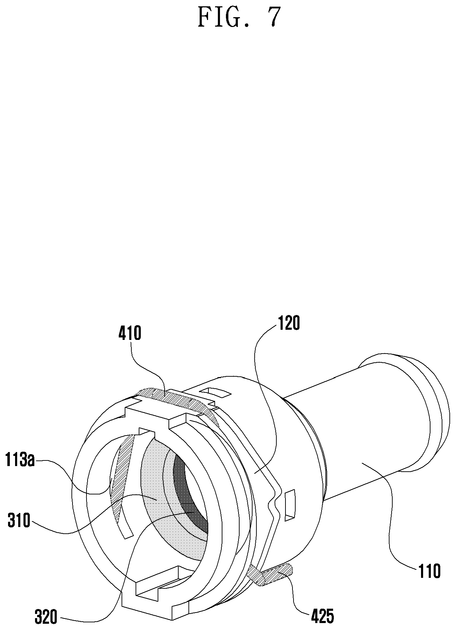

As illustrated in FIGS. 6A and 6B and FIG. 7, the fixing member 400 is a component corresponding to the gist of the disclosure, and includes, for example, a fixing body 410 and bent portions 420 as a configuration for easily fixing the coupling case 200, inserted into the hollow portion 111, to the outer body 110, and for allowing the inner body 210 to be separated without completely separating the fixing member 400 when separating the inner body 210.

The fixing body 410 is made of a generally elastic material such as metal in a "U" shape or a "⊏" shape, and is inserted into the insertion grooves 113 formed in the outer body 110.

The fixing body 410 inserted into the insertion grooves 113 are partially exposed inside the hollow portion 111 through through-holes 113a formed in the insertion grooves 113 to communicate with the hollow portion 111, and the exposed body is configured to be inserted into the coupling groove 211 formed in the outer surface of the inner body 210 by elastic force so as to fix the inner body 210 by compression (see FIG. 4).

At this time, the opposite ends of the fixing body 410 having a pair of bent portions formed to have a predetermined angle in the same or different directions. It is preferable that the pair of bent portions 420 to be exposed to outwards from the insertion grooves 113, respectively, so as to compress the outer surface of the outer body 110 by the elasticity thereof or to be engaged with the outer body 110, thereby preventing the fixing body 410 from escaping.

Meanwhile, any one of the pair of bent portions 420 is seated in the above-described seating above such that, when the inner body 210 inserted into the hollow portion 111 during separation, the inner body 210 can be separated without completely separating the fixing body 410 from the outer body 110.

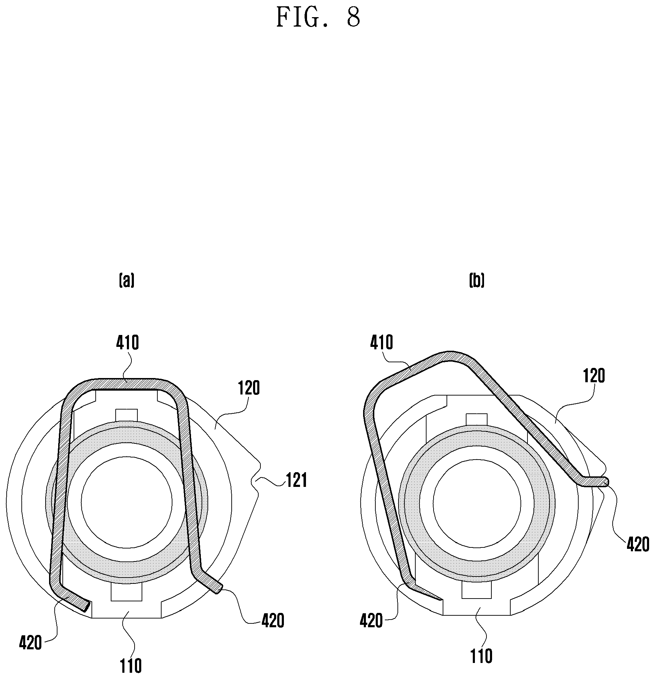

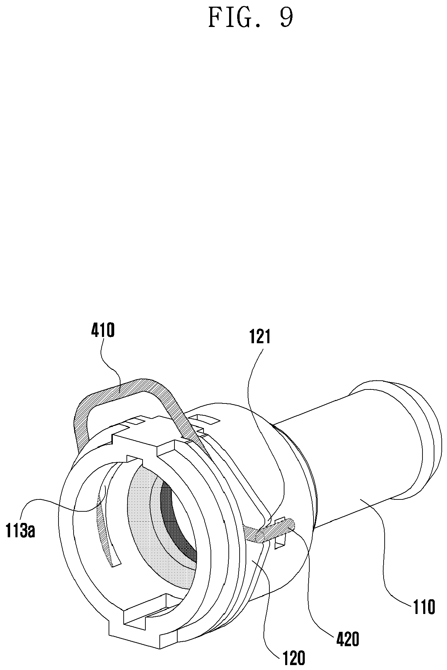

As illustrated in FIGS. 8A and 8B and FIG. 9, when it is necessary to separate the inner body 210, an operator may grip and lift one of the pair of bent portions 420 to rotate the one bent portion 420 about the other one of the bent portions 420, and may deform the fixing body 410 inserted into the coupling groove 211 in the hollow portion so as to release the fixing body 410.

Thereafter, when the operator seats the gripped bent portion 420 in the seating groove 121 formed in the escape prevention piece 120, the fixing body 410 may be fully released from the coupling groove 211, so that the inner body 210 is separable from the hollow portion 111.

At this time, the seating groove 121 formed in the escape prevention piece 120 is preferably formed at a position where the fixing body 410 inserted into the coupling groove 211 can be fully released from the coupling groove 211 without escaping from the outer body 110 when any of the bent portion 420 is seated in the seating groove 121.

The quick connector 1 according to the disclosure configured as described above has an effect compared to the conventional one in that the inner body 210 inserted into the hollow portion 111 to be connected to the outer body 110 can be easily separated by rotating the fixing body 410 such that a lifted bent portion 420 can be seated in the seating groove 121, rather than fully separating the fixing body 420 from the outer body 110.

## Claims

1. A quick connector assembly comprising:
a tubular outer case (100) having a hollow portion (111) formed therein;
a coupling case (200) inserted into the hollow portion (111) to be connected to the outer case (100) so as to allow fluid therethrough;
an airtightness maintaining member (300) provided inside the hollow portion (111) and coupled to an outer surface of the coupling case such that airtightness between the coupling case (200) and the outer case (100) can be maintained; and
a fixing member (400) detachably fitted from an outside of the outer case (100) to fix the coupling case (200) inserted into the hollow portion (111) by elasticity thereof,
wherein the fixing member (400) is introduced toward the hollow portion (111) from the outside of the outer case (100) so as to fix an outer surface of the coupling case (200) located inside the hollow portion by compression.

2. The quick connector assembly of claim 1, wherein the fixing member (400) includes:
a fixing body (410) formed in a "U" shape or "⊏" shape, and configured to be fitted to the outer surface of the outer case (100), opposite portions of the fixing body (410) being introduced into the hollow portion (111) to compress the coupling case (200); and
a pair of bent portions (420) formed by bending opposite ends of the fixing body (410) to prevent the fixing body (410) from escaping from the outer case (100).

3. The quick connector assembly of claim 1, wherein the outer case (100) includes:
an outer body (110) opened at opposite ends thereof and having therein the hollow portion (111) formed in a longitudinal direction, a hose being fitted onto an outer surface of one end thereof; and
an insertion groove (113) formed in a remaining end of the outer body (110) to communicate with the hollow portion (111) such that the fixing member (400) being inserted into the insertion groove (113) so as to fix the coupling case (200),
wherein an installation groove (117), into which the airtightness maintaining member (300) is fixedly inserted, is formed in an inner surface of the outer body (110), and a seating groove (121) is formed in the outer surface of the outer body 110 such that the fixing member (400) is seated therein such that the coupling case (200) is detachable without fully separating the fixing member (400) when separating the fixing member from the insertion groove (113), and
wherein the seating groove (121) is formed in an escape prevention piece (120) formed to protrude to be connected to an upper end of the insertion groove (113), thereby preventing the fixing member (400) from escaping.

4. The quick connector assembly of claim 1, wherein the coupling case (200) includes:
an inner body (210), one end of which is connected to the hose and a remaining end of which is inserted into the hollow portion (111) to be connected to the outer case (100), and
wherein the remaining end of the inner body (210) is press-fitted to the airtightness maintaining member (300) so as to maintain airtightness for preventing the fluid from leaking out while moving, and a coupling groove (211), into which the fixing member (400) introduced into the hollow portion (111) is inserted, is formed in the outer surface of the remaining end of the inner body (210).
